# EUROPÄISCHE PATENTSCHRIFT

(11) **EP 1 110 589 B1**
(45) Veröffentlichungstag und Bekanntmachung des Hinweises auf die Patenterteilung: **24.11.2004**
(21) Anmeldenummer: 00120821.4
(22) Anmeldetag: 23.09.2000
(51) Int. Cl.: B01D 29/11, B01D 35/16, B01D 29/68

(54) **Rückspülbare Filtereinrichtung**
Back-flushable filtering device
Dispositif de filtration de rinçage à contre-courant

(30) Priorität: 20.12.1999 DE 19961406
(43) Veröffentlichungstag der Anmeldung: 27.06.2001
(73) Patentinhaber: Judo Wasseraufbereitung GmbH, D-71364 Winnenden (DE)
(72) Erfinder: Fiess, Helmut, 71576 Burgstetten (DE)
(74) Vertreter: KOHLER SCHMID + PARTNER

(56) Entgegenhaltungen:
- DE-A- 2 852 611
- DE-A- 4 343 180
- DE-C- 4 416 149
- US-A- 5 443 726

## Beschreibung

Die Erfindung betrifft eine rückspülbare Filtereinrichtung, insbesondere für eine Hauswasseranlage, mit einem koaxial zu einem Gehäuse angeordneten Filtereinsatz zwischen einem Ein- und einem Auslaß, der im Normalbetrieb von außen nach innen und im Rückspülbetrieb wenigstens abschnittsweise von innen nach außen durchströmt wird, mit einem zur Einleitung der Rückspülung betätigbaren Rückspülventil und wenigstens einer zu dem Rückspülventil führenden Rückspülrinne, wobei der Filter und die Rückspülrinne relativ zueinander drehbar sind und wobei das Rückspülventil als Antrieb zum Öffnen und Schließen eine um ihre Längsachse drehbare Hohlwelle aufweist, die einenends über das Rückspülventil in die Rückspülrinne mündet und im Rückspülbetrieb als Auslaßkanal für das Rückspülwasser dient.

Eine solche rückspülbare Filtereinrichtung ist bekannt durch die Firmendruckschrift "SPEEDY" der Firma Judo Wasseraufbereitung GmbH, Hohreuschstraße 39-41, D-71364 Winnenden aus dem Jahre 1997 sowie aus der Firmendruckschrift "JUKO" derselben Firma aus dem Jahre 1998.

Eine ähnliche Filtereinrichtung ist beispielsweise in der DE 34 09 473 C2 beschrieben. Diese Filtereinrichtung zeichnet sich durch ihre kompakte Bauweise und ihre gute Rückspülwirkung aus.

Nachteilig bei den bekannten Filtereinrichtungen ist hingegen, daß entweder die Rückspülrinne und das Rückspülventil unabhängig voneinander betätigt werden müssen oder aber der Drehbewegung für die Rückspülrinne eine Hubbewegung für das Rückspülventil überlagert werden muß. Dies führt zum einen zu einer komplizierten Anordnung und erschwert zum anderen eine automatisierte Rückspülung erheblich. Insbesondere muß beim Durchführen des Rückspülbetriebes der Benutzer den Antrieb zunächst durch Drehen der Hohlwelle in einer Richtung betätigen, bis er das Rückspülventil in eine Anschlagsstellung gedreht hat, von der er aber sofort wieder in der anderen Richtung zurückdrehen muß, da ja während der Rückspülung das Rückspülwasser in der Regel in einen unter den Auslaßkanal gestellten Eimer, der nur ein begrenztes Fassungsvermögen hat, unter Druck abfließt. Der Benutzer ist also gezwungen, in relativ kurzer Zeit das Rückspülventil wieder in seine Ausgangsstellung vor Beginn der Rückspülung zurückzudrehen, damit der Eimer nicht zum Überlaufen gebracht wird.

Aufgabe der vorliegenden Erfindung ist es demgegenüber, eine rückspülbare Filtereinrichtung mit den eingangs beschriebenen Merkmalen vorzustellen, die auf möglichst einfache und kostengünstige Weise die oben beschriebenen Nachteile vermeidet, wobei die kompakte Bauweise der bekannten Einrichtungen und ihre gute Rückspülwirkung erhalten bleiben sollen.

Erfindungsgemäß wird diese Aufgabe ebenso überraschend wie wirkungsvoll dadurch gelöst, dass das Rückspülventil ein Drehschieberventil ist, dass das Drehschieberventil eine untere Ventilscheibe und eine obere Ventilscheibe umfasst, und dass das Rückspülventil mit Ausnahme der oberen Ventilscheibe und die Rückspülrinne starr miteinander verbunden und derart im Gehäuse gelagert sind, daß beide zur Durchführung des Rückspülbetriebes um die Längsachse der Hohlwelle ausschließlich eine Drehbewegung ohne Hubbewegung durchführen.

Die erfindungsgemäße Filtereinrichtung ist in ihrem Aufbau mechanisch einfacher und in ihrer Wirkungsweise bedienerfreundlicher gestaltet, da der durch Drehen des Antriebs in einer bestimmten Richtung eingeleitete Rückspülbetrieb durch Weiterdrehen in der gleichen Richtung auch wieder beendet werden kann.

Das Rückspülventil ist erfindungsgemäß als preisgünstig erhältliches Drehschieberventil ausgestaltet, welches als Standardelement beispielsweise bei Eckventilen im Sanitärbereich als Massenware vielfältig eingesetzt wird.

Eine vorteilhafte Ausführungsform sieht vor, daß das Drehschieberventil ein Paar von Keramikscheiben umfaßt. Dieser Werkstoff ist bekanntermaßen extrem verschleißarm und ebenfalls standardmäßig im Sanitärbereich, beispielsweise bei Einhebelmischern in Verwendung.

Bevorzugt ist auch eine Weiterbildung dieser Ausbildungsform, bei der in mindestens einer Position des Drehschieberventils zusätzlich zu einer Öffnung im Ablaßventil, die zur Rückspülrinne führt, eine weitere Öffnung für das Ausspülen von Grobschmutzpartikeln aus dem Bodenbereich der Filtereinrichtung vorgesehen ist. Hierdurch kann beim Rückspülen eine erheblich effektivere Reinigung der erfindungsgemäßen Filtereinrichtung erfolgen. Außerdem wird eine große Ansammlung von Grobschmutz in der Filtereinrichtung damit praktisch ausgeschlossen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigen:
- Fig. 1: einen schematischen Schnitt durch eine Ausführungsform der erfindungsgemäßen Filtereinrichtung in einer die Längsachse der Hohlwelle enthaltenden Ebene;
- Fig. 2a: eine schematische Draufsicht auf eine Ausführungsform einer oberen Ventilscheibe im Rückspülventil der erfindungsgemäßen Filtereinrichtung; und
- Fign. 2b - 2f: verschiedene Drehstellungen der oberen Ventilscheibe relativ zu einer unteren Ventilscheibe.

### Beispiel 1:

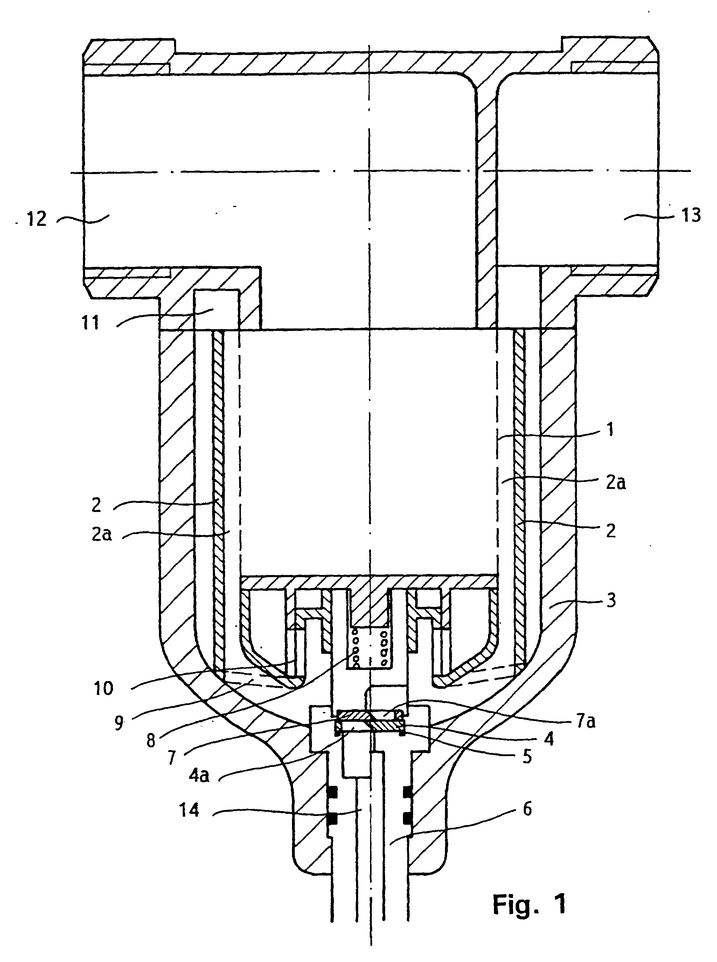

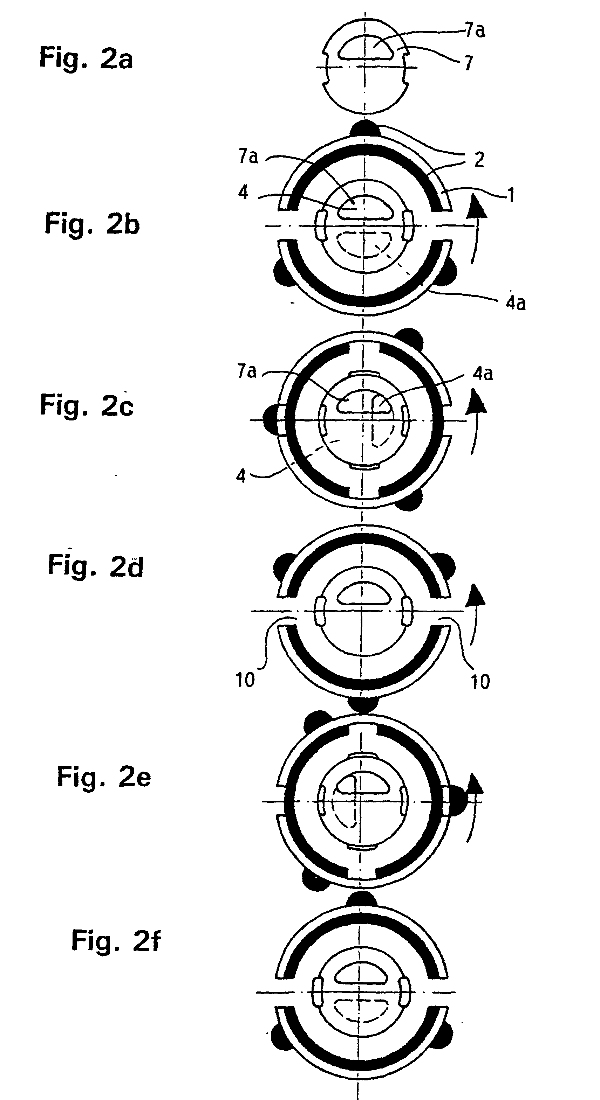

In Fig. 1 ist eine beispielhafte rückspülbare Filtereinrichtung dargestellt. Das zu filtrierende Wasser strömt über einen Einlaß 13 sowie einen Einlaßringkanal 11 zu einem Siebeinsatz 1, durch diesen von außen nach innen hindurch und verläßt die Filtereinrichtung über einen Auslaß 12. Das Rückspülventil besteht aus einer drehbaren Hohlwelle 6, die starr mit einer unteren Ventilscheibe 4 und einer Ventilscheibendichtung 5 verbunden ist, und einer oberen Ventilscheibe 7, die feststehend in der Filtereinrichtung angeordnet ist und durch ein Druckfederelement 8 auf die untere Ventilscheibe 4 gepreßt wird. Beim Rückspülen werden im Gehäuse 3 der Filtereinrichtung angeordnete, ebenfalls starr mit der Hohlwelle 6 verbundene Rückspülrinnen 2 in Umfangsrichtung über die Oberfläche des Siebeinsatzes 1 bewegt. Wird nun beim Rückspülen die Hohlwelle 6 betätigt, so wird hierdurch auch die starr mit der Hohlwelle 6 verbundene untere Ventilscheibe 4 um die Rotationsachse der Hohlwelle 6 gedreht, wie in den Figuren 2b-2f verdeutlicht ist.

In Fig. 2b sieht man, daß im Normalbetrieb (Filtrationsbetrieb) die Öffnung 4a der unteren Ventilscheibe 4 durch die Ventilscheibe 7 überdeckt wird und das Spülventil somit geschlossen ist. Wird nun zum Zwecke des Rückspülens die Drehachse des Spülventils betätigt, so dreht sich die Ventilscheibe 4 unter der Ventilscheibe 7, wobei die Ventilscheibenöffnungen 4a und 7a zur Deckung gebracht werden (Fign. 2c und 2d). Dreht man die Ventilscheibe 4 weiter, so verkleinert sich die durch 4a und 7a gebildete Öffnung wieder (Fig. 2e) bis sie (Fig. 2f) wieder ganz geschlossen ist. Solange diese Öffnung jedoch besteht, kann Rückspülwasser entgegen der Filtrationsrichtung - also von innen nach außen - durch den Siebeinsatz 1 und über die Saugkanäle 2a der Rückspülrinnen 2 durch die Ventilscheiben 7/4 in den Spülwasserauslaßkanal 14 strömen (siehe Fig. 1).

### Beispiel 2:

In einer besonders bevorzugten Ausführungsform können sich gröbere Feststoffpartikel, die vom Siebeinsatz 1 zurückgehalten werden, aber nicht am Sieb haften bleiben, auf dem Zwischenboden 9 sammeln und werden über die Ventilöffnung 10 der Grobabsaugung ausgespült, wenn gleichzeitig auch das Spülventil 4a/7a geöffnet ist (siehe Fig. 2d).

### Beispiel 3:

In einer ganz besonders bevorzugten Ausführung sind die Ventilscheiben 4/7 aus einem keramischen Werkstoff wie z.B. Aluminiumoxid oder Siliziumcarbid aufgebaut.

## Patentansprüche

1. Rückspülbare Filtereinrichtung, insbesondere für eine Hauswasseranlage, mit einem koaxial zu einem Gehäuse (3) angeordneten, Filtereinsatz (1) zwischen einem Einlaß (13) und einem Auslaß (12), der im Normalbetrieb von außen nach innen und im Rückspülbetrieb wenigstens abschnittsweise von innen nach außen durchströmt wird mit einem zur Einleitung der Rückspülung betätigbaren Rückspülventil und wenigstens einer zu dem Rückspülventil führenden Rückspülrinne (2), wobei der Filter (1) und die Rückspülrinne (2) relativ zueinander drehbar sind und wobei das Rückspülventil als Antrieb zum Öffnen und Schließen eine um ihre Längsachse drehbare Hohlwelle (6) aufweist, die einenends über das Rückspülventil in die Rückspülrinne (2) mündet und im Rückspülbetrieb als Auslaßkanal (14) für das Rückspülwasser dient,
**dadurch gekennzeichnet,**
**dass** das Rückspülventil (4, 5, 7, 8, 10) ein Drehschieberventil ist, dass das Drehschieberventil eine untere Ventilscheibe (4) und eine obere Ventilscheibe (7) umfasst, und dass das Rückspülventil (4, 5, 8, 10) mit Ausnahme der oberen Ventilscheibe (7) und die Rückspülrinne (2) starr miteinander verbunden und derart im Gehäuse (3) gelagert sind, daß beide zur Durchführung des Rückspülbetriebes um die Längsachse der Hohlwelle (6) ausschließlich eine Drehbewegung ohne Hubbewegung durchführen.

2. Filtereinrichtung nach Anspruch 1, **dadurch gekennzeichnet, daß** das Drehschieberventil ein Paar von Keramikscheiben (4, 7) umfaßt.

3. Filtereinrichtung nach einem der Ansprüche 1 oder 2, **dadurch gekennzeichnet, daß** in mindestens einer Position des Drehschieberventils zusätzlich zu einer Öffnung (4a, 7a) im Rückspülventil (4, 5, 7, 8, 10), die zur Rückspülrinne (2) führt, eine zusätzliche Öffnung (10) für das Ausspülen von Grobschmutzpartikeln aus dem Bodenbereich der Filtereinrichtung vorgesehen ist.

## Claims

1. Reversible flow filter means, in particular for a domestic water system, comprising a filter insert (1) which is disposed coaxially to a housing (3) between an inlet (13) and an outlet (12), through which a flow passes from the outside to the inside during normal operation, and, at least in sections thereof, from the inside to the outside during reverse flow operation, with a reversible flow valve which can be actuated to initiate reverse flow, and at least one reversible flow channel (2) which leads to the reversible flow valve, wherein the filter (1) and the reversible flow channel (2) can be rotated relative to each other, and wherein the reversible flow valve comprises a hollow shaft (6) as a drive for opening and closing, which can be rotated about its longitudinal axis, and terminates at one end in the reversible flow channel (2) via the reversible flow valve, and during reverse flow operation, serves as an outlet channel (14) for the reverse flow water, **characterized in that**
the reversible flow valve (4, 5, 7, 8, 10) is a rotary slide valve, the rotary slide valve comprises a lower valve disc (4) and an upper valve disc (7), and the reversible flow valve (4, 5, 8, 10), with the exception of the upper valve disc (7), and the reversible flow channel (2) are rigidly connected and disposed in the housing (3) such that, for carrying out the reverse flow operation, these two perform exclusively a rotary motion, without a lifting motion, about the longitudinal axis of the hollow shaft (6).

2. Filter means according to claim 1, **characterized in that** the rotary slide valve comprises a pair of ceramic discs (4, 7).

3. Filter means according to any one of the claims 1 or 2, **characterized in that** in at least one position of the rotary slide valve an additional opening (10) for rinsing coarse dirt particles from the bottom region of the filter means is provided, in addition to an opening (4a, 7a) in the reversible flow valve (4, 5, 7, 8, 10), which extends to the reversible flow channel (2).

## Revendications

1. Dispositif de filtration avec rinçage à contre-courant, en particulier pour une installation d'eau domestique, comprenant un insert de filtre (1) agencé coaxialement dans un boîtier (3) entre une entrée (13) et une sortie (12), ledit insert étant traversé en fonctionnement normal depuis l'extérieur vers l'intérieur et étant traversé lors du rinçage à contre-courant au moins localement de l'intérieur vers l'extérieur, comprenant une soupape de rinçage à contre-courant susceptible d'être actionnée pour amorcer le rinçage à contre-courant, et au moins une goulotte de rinçage (2) menant à la soupape de rinçage, dans lequel le filtre (1) et la goulotte de rinçage (2) sont en rotation l'un par rapport à l'autre, et la soupape de rinçage comprend à titre d'entraînement pour l'ouverture et la fermeture un arbre creux (6) capable de tourner autour de son axe longitudinal, qui débouche à une extrémité via la soupape de rinçage dans la goulotte de rinçage (2) et qui sert lors du rinçage à contre-courant à titre de canal de sortie (14) pour l'eau de rinçage à contre-courant,
**caractérisé en ce que**
la soupape de rinçage à contre-courant (4, 5, 7, 8, 10) est une soupape à tiroir rotatif,
la soupape à tiroir rotatif comprend un disque de soupape inférieur (4) et un disque de soupape supérieur (7), et
la soupape de rinçage à contre-courant (4, 5, 8, 10), à l'exception du disque de soupape supérieur (7), et la goulotte de rinçage (2) sont reliés rigidement l'une à l'autre et montées de telle manière dans le boîtier (3) qu'elles exécutent toutes deux exclusivement un mouvement de rotation autour de l'axe longitudinal de l'arbre creux (6) sans mouvement de translation pour procéder au fonctionnement en rinçage à contre-courant.

2. Dispositif de filtration selon la revendication 1, **caractérisé en ce que** la soupape à tiroir rotatif comprend une paire de disques en céramique (4, 7).

3. Dispositif de filtration selon l'une ou l'autre des revendications 1 et 2, **caractérisé en ce que**, dans au moins une position de la soupape à tiroir rotatif, en supplément à une ouverture (4a, 7a) dans la soupape de rinçage à contre-courant (4, 5, 7, 8, 10) qui mène à la goulotte de rinçage (2), il est prévu une ouverture supplémentaire (10) pour la chasse de particules grossières de saletés hors de la région au fond du dispositif de filtration.
